# EUROPÄISCHE PATENTSCHRIFT

(11) **EP 2 982 898 B1**
(45) Veröffentlichungstag und Bekanntmachung des Hinweises auf die Patenterteilung: **17.05.2017**
(21) Anmeldenummer: 14306257.8
(22) Anmeldetag: 08.08.2014
(51) Int. Cl.: F16L 59/065, F16L 59/08, F16L 59/14, F16L 59/153, F16L 11/12, F16L 11/15, F16L 11/20, F16L 53/00

(54) **Flexible Rohrleitung**
Flexible conduit
Conduite flexible

(43) Veröffentlichungstag der Anmeldung: 10.02.2016
(73) Patentinhaber: Nexans, 75008 Paris (FR)
(72) Erfinder: Dr. Soika, Rainer, 30559 Hannover (DE); Di Palma, Michele, 31832 Springe (DE)
(74) Vertreter: Peguet, Wilfried

(56) Entgegenhaltungen:
- EP-A1- 0 326 923
- WO-A1-00/25054
- US-A- 3 565 118

## Beschreibung

Die Erfindung bezieht sich auf eine flexible Rohrleitung zum Transport eines tiefgekühlten Mediums gemäß dem Oberbegriff des Patentanspruchs 1.

Eine solche Rohrleitung geht beispielsweise aus der US 3,565,118 A hervor.

Eine derartige Rohrleitung wird beispielsweise zur Versorgung von supraleitfähigen Magnetsystemen oder von Kryopumpen oder von größeren Kühlanlagen mit einem Kühlmedium benötigt. Sie soll flexibel sein und gegebenenfalls auch eine größere Länge haben. Die eingesetzten Rohre bestehen mit Vorteil aus Edelstahl. Sie sind quer zu ihrer Längsrichtung gewellt und dadurch nicht nur gut biegbar sondern auch stabil gegenüber radialen Belastungen. Die quer zu ihrer Längsrichtung verlaufende Wellung kann wendelförmig oder ringförmig ausgeführt sein.

Bei der bekannten Rohrleitung nach der EP 2 253 878 B1 ist zwischen dem Führungsrohr und dem Begrenzungsrohr ein zweites Rohrsystem zum Führen eines als thermischer Schirm für das durch das Führungsrohr geleitete tiefgekühlte Medium dienenden tiefgekühlten Mediums angeordnet. Das zweite Rohrsystem besteht aus einem inneren, quer zu seiner Längsrichtung gewellten Rohr aus Metall und einem mit Abstand und koaxial zu demselben angeordneten äußeren, ebenfalls quer zu seiner Längsrichtung gewellten Rohr aus Metall. Das innere Rohr des zweiten Rohrsystems ist räumlich dicht am Führungsrohr der Rohrleitung angeordnet und zwischen dem Führungsrohr der Rohrleitung und dem inneren Rohr des zweiten Rohrsystems ist eine das Führungsrohr in seiner relativen Lage zum inneren Rohr unverrückbar haltende Abstandshalterung aus Isoliermaterial angeordnet. Diese bekannte Rohrleitung hat sich in der Praxis bewährt.

Sie hat aber bedingt durch die vier konzentrisch und mit Abstand zueinander angeordneten Rohre einen relativ großen Außendurchmesser.

Aus der eingangs erwähnten US 3,565,118 A geht eine Rohrleitung hervor, welche ein aus Metall bestehendes Führungsrohr zur Führung eines tiefgekühlten Mediums aufweist. Um das Führungsrohr ist ein als Abstandshalter dienendes Band mit rechteckigem Querschnitt wendelförmig herumgewickelt, das auch aus Metall bestehen kann. Um das Band ist mit gegenläufiger Schlagrichtung ein Kühlrohr wendelförmig herumgewunden, das ein äußeres tiefgekühltes Medium führt. Um die Einheit aus Führungsrohr und Kühlrohr ist eine Metallschicht rundum angebracht, um welche ein zweiter als Band ausgeführter Abstandshalter wendelförmig herumgewunden ist. Über dem Abstandshalter liegt eine aus mehreren Lagen bestehende Isolierung, die von einem quer zu seiner Längsrichtung gewellten Rohr umgeben ist.

Der Erfindung liegt die Aufgabe zugrunde, die eingangs geschilderte Rohrleitung so weiterzubilden, daß ihr Außendurchmesser gegenüber der beispielsweise aus der EP 2 253 878 B1 bekannten Rohrleitung verkleinert werden kann.

Diese Aufgabe wird entsprechend dem kennzeichnenden Merkmal des Patentanspruchs 1 gelöst.

Die Größe des Kühlraums, durch welchen das äußere tiefgekühlte Medium geleitet wird, wird durch den Außendurchmesser des mindestens einen Kühlrohrs bestimmt. Dieser Außendurchmesser ist deutlich kleiner als der Außendurchmesser des Führungsrohrs, so daß die radialen Abmessungen der Einheit aus Führungsrohr und Kühlrohr gegenüber den Abmessungen der bekannten Rohrleitung nach der EP 2 253 878 B1 bis zu dem den Kühlraum begrenzenden Rohr des zweiten Rohrsystems wesentlich kleiner sind. Das gilt damit auch für die Rohrleitung insgesamt, zu welcher neben der Einheit aus Führungsrohr und Kühlrohr die Schicht der Superisolierung und das äußere Begrenzungsrohr gehören, das insgesamt einen evakuierten Zwischenraum umschließt, in dem sich auch die Superisolierung befindet. In praktischer Ausführung hat die Rohrleitung einen gegenüber der bekannten Rohrleitung nach der erwähnten Schrift um 25 % bis 30 % verkleinerten Außendurchmesser, wodurch ihre Handhabung wesentlich erleichtert wird. Die das Führungsrohr umgebende Schicht aus thermisch isolierendem Material stellt sicher, daß die beiden aus Metall bestehenden Rohre, das Führungsrohr einerseits und das Kühlrohr andererseits, einander nicht berühren.

In bevorzugter Ausführungsform ist um das zentrale Führungsrohr herum eine Vielzahl von Kühlrohren herumgewunden, mit entsprechend vergrößertem Kühlraum, die auch dicht an dicht liegen können.

Ein Ausführungsbeispiel des Erfindungsgegenstandes ist in den Zeichnungen dargestellt.

Es zeigen:
Fig. 1 einen Querschnitt durch eine Rohrleitung nach der Erfindung.
Fig. 2 eine Einzelheit der Rohrleitung nach Fig. 1 in rein schematischer Darstellung.

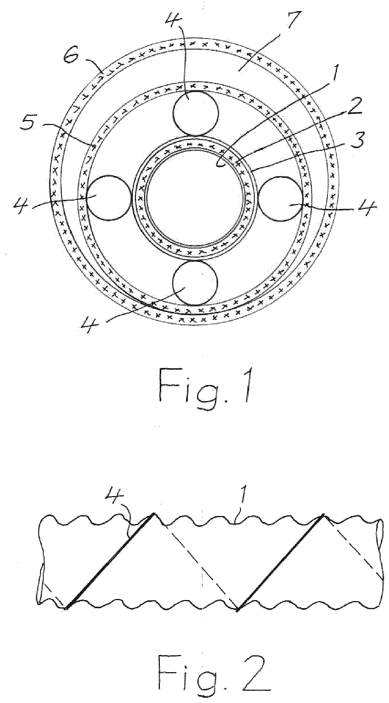

Ein in Fig. 1 dargestelltes zentrales Führungsrohr 1 dient zur Führung eines tiefgekühlten Mediums, beispielsweise von flüssigem Helium, das mit einer Temperatur von etwa 4,5 K in das Führungsrohr 1 eingespeist werden kann. Das Führungsrohr 1 ist quer zu seiner Längsrichtung gewellt und dadurch gut biegbar, aber auch stabil gegenüber radialen Belastungen. Es besteht mit Vorteil aus Edelstahl. Um das Führungsrohr 1 herum ist eine Schicht 2 aus einem thermische isolierenden Material angebracht, die mit Vorteil von einer Schicht 3 aus mechanisch stabilem Material umgeben sein kann. Die Schicht 2 kann nur aus einem thermisch isolierenden Material bestehen. Sie kann mit Vorteil aber auch als Superisolierung ausgeführt sein und mindestens eine Lage aus einem zumindest einseitig mit Metall beschichteten Kunststoffband aufweisen.

Um das Führungsrohr 1 bzw. die dasselbe umgebenden Schichten 2 und 3 sind in der dargestellten Ausführungsform vier Kühlrohre 4 angeordnet, die auf der ganzen Länge der Rohrleitung wendelförmig um das Führungsrohr 1 herumgewunden sind. Es soll mindestens ein Kühlrohr 4 vorhanden sein, das entsprechend der rein schematischen Darstellung in Fig. 2 wendelförmig um das Führungsrohr 1 herumgewunden ist. Das Kühlrohr 4 ist dabei nur durch eine Linie angedeutet. Es können auch zwei oder drei oder mehr als vier Kühlrohre 4 um das Führungsrohr 1 herumgewunden sein.

Die Kühlrohre 4 dienen zur Führung eines äußeren tiefgekühlten Mediums. Sie bewirken dadurch insgesamt einen thermischen Schirm für das im Führungsrohr 1 geführte tiefgekühlte Medium gegenüber von außen wirkender Wärme. In die Kühlrohre 4 kann beispielsweise flüssiger Stickstoff bei einer Temperatur von etwa 80 K eingespeist werden. Statt des flüssigen Stickstoffs könnte auch gasförmiges Helium eingesetzt werden, das vorzugsweise am fernen Ende der Rohrleitung in die Kühlrohre 4 eingespeist wird.

Der Außendurchmesser der Kühlrohre 4 ist deutlich kleiner als der Außendurchmesser des Führungsrohrs 1. Er liegt mit Vorteil beispielsweise bei 30 % vom Außendurchmesser des Führungsrohrs 1. Vorzugsweise beträgt der Außendurchmesser der Kühlrohre 4 weniger als 30 % des Außendurchmessers des Führungsrohrs 1. Er kann beispielsweise auch bei nur 10 % vom Außendurchmesser des Führungsrohrs 1 liegen. Diese Zahlenangaben gelten analog auch für die jeweiligen Innendurchmesser der Rohre.

Die Kühlrohre 4 bestehen vorzugsweise auch aus Edelstahl. Sie sind mit Vorteil ebenfalls quer zu ihrer Längsrichtung gewellt und dadurch gut biegbar.

Über den Kühlrohren 4 liegt eine die Einheit aus Führungsrohr 1 und Kühlrohren 4 insgesamt rundum umgebende Schicht 5, die mit Vorteil als Superisolierung ausgeführt ist. Sie besteht aus mindestens einer Lage einer reflektierenden Folie, die als mindestens einseitig mit Metall beschichtetes Kunststoffband ausgeführt sein kann. Die reflektierende Folie kann auch eine Metallfolie sein. Eventuell von außen einfallende Wärme wird durch die Folie abgewehrt bzw. reflektiert.

Die Rohrleitung weist außerdem ein äußeres Begrenzungsrohr 6 aus Metall auf, das ebenfalls quer zu seiner Längsrichtung gewellt ist und mit Vorteil aus Edelstahl besteht. Es ist mit Abstand zur Schicht 5 angeordnet und umschließt einen als Hohlraum ausgeführten Zwischenraum 7, der nicht nur außerhalb der Schicht 5, sondern auch innerhalb derselben vorhanden ist. Der Zwischenraum 7 ist evakuiert. Die Kühlrohre 4 liegen damit in einem Vakuum, innerhalb des evakuierten Zwischenraums 7.

## Patentansprüche

1. Flexible Rohrleitung zum Transport eines tiefgekühlten Mediums, die ein quer zu seiner Längsrichtung gewelltes, zentrales Führungsrohr (1) aus Metall zum Durchleiten des tiefgekühlten Mediums und ein unter Bildung eines Zwischenraums mit Abstand zu demselben angeordnetes, ebenfalls quer zu seiner Längsrichtung gewelltes Begrenzungsrohr (6) aus Metall aufweist, bei welcher in dem Zwischenraum zwischen dem Führungsrohr (1) und dem Begrenzungsrohr (6) ein Kühlraum zum Durchleiten eines äußeren tiefgekühlten Mediums vorhanden ist, bei welcher der Zwischenraum evakuiert ist, bei welcher auf der ganzen Länge der Rohrleitung um das Führungsrohr (1) mit Abstand zu demselben mindestens ein Kühlrohr (4) aus Metall wendelförmig herumgewunden ist, das einen deutlich kleineren Außendurchmesser als das Führungsrohr (1) hat und das den Kühlraum zum Durchleiten des äußeren tiefgekühlten Mediums bildet, und bei welcher um die Einheit aus Führungsrohr (1) und Kühlrohr (4) herum eine rundum vorhandene Schicht (5) angebracht ist, die aus mindestens einer Lage einer Metall enthaltenden, reflektierenden Folie besteht, **dadurch gekennzeichnet, daß** um das Führungsrohr (1) herum eine Schicht (2) aus einem thermisch isolierenden Material angebracht ist, um die herum das Kühlrohr (4) wendelförmig herumgewunden ist.

2. Rohrleitung nach Anspruch 1, **dadurch gekennzeichnet, daß** der Außendurchmesser des Kühlrohres (4) eine Größe hat, die 30 % oder weniger vom Außendurchmesser des Führungsrohrs (1) entspricht.

3. Rohrleitung nach Anspruch 1, **dadurch gekennzeichnet, daß** um das Führungsrohr (1) herum eine Vielzahl von vorzugsweise dicht an dicht liegenden Kühlrohren (4) herumgewunden ist.

4. Rohrleitung nach Anspruch 1, **dadurch gekennzeichnet, daß** die reflektierende Folie ein mindestens einseitig mit Metall beschichtetes Kunststoffband ist.

## Claims

1. A flexible pipeline for the transport of a deep-cooled medium, which has a central guide tube (1) corrugated transversely to its longitudinal direction made of metal for conducting the deep-cooled medium and a limit tube (6) made of metal arranged with the formation of an intermediate space at a distance to the same, corrugated also transversely to its longitudinal direction, in which in the intermediate space between the guide tube (1) and the limit tube (6) a cooling chamber exists for conducting an externally deep-cooled medium, in which the intermediate space is evacuated, in which a cooling tube (4) made of metal is helically wound around the guide tube (1) at a distance to the same on the entire length of the pipeline, which cooling tube has a significantly smaller outer diameter than the guide tube (1) and which forms the cooling chamber for conducting the externally deep-cooled medium, and wherein around the unit consisting of the guide tube (1) and the cooling tube (4) a circumferentially existing layer (5) is applied, which consists of at least one layer of a metal-containing, reflective film, **characterized in that** around the guide tube (1) a layer (2) consisting of a thermally insulating material is applied, around which the cooling tube (4) is helically wound.

2. A pipeline according to Claim 1, **characterized in that** the outer diameter of the cooling tube (4) has a size, which corresponds to 30% or less of the outer diameter of the guide tube (1).

3. A pipeline according to Claim 1, **characterized in that** around the guide tube (1) a plurality of cooling tubes (4) is wound, which are preferably located side by side.

4. A pipeline according to Claim 1 **characterized in that** the reflective film is a plastic band coated at least on one side with metal.

## Revendications

1. Canalisation flexible pour le transport d'un milieu surgelé, qui comprend un tube de guidage (1) métallique central, ondulé transversalement par rapport à sa direction longitudinale, pour l'écoulement du milieu surgelé et un tube de limitation (6) métallique, ondulé également transversalement par rapport à sa direction longitudinale, disposé à une certaine distance de celui-ci du fait de la formation d'un espace intermédiaire, dans lequel, dans l'espace intermédiaire entre le tube de guidage (1) et le tube de limitation (6), se trouve un espace de refroidissement pour l'écoulement d'un milieu surgelé externe, dans lequel l'espace intermédiaire est évacué et dans lequel, sur toute la longueur de la canalisation, autour du tube de guidage (1), à une certaine distance de celui-ci, est enroulé en spirale au moins un tube de refroidissement (4) métallique, qui présente un diamètre extérieur nettement inférieur à celui du tube de guidage (1) et qui forme l'espace de refroidissement pour l'écoulement du milieu surgelé externe et dans lequel, autour de l'unité constituée du tube de guidage (1) et du tube de refroidissement (4), est posée une couche (5) disposée tout autour, qui est constituée d'au moins une couche d'un film réfléchissant contenant un métal, **caractérisée en ce que**, autour du tube de guidage (1), est posée une couche (2) constituée d'un matériau isolant thermiquement, autour de laquelle le tube de refroidissement (4) est enroulé en spirale.

2. Canalisation selon la revendication 1, **caractérisée en ce que** le diamètre extérieur du tube de refroidissement (4) présente une taille qui correspond à 30 % ou moins du diamètre extérieur du tube de guidage (1).

3. Canalisation selon la revendication 1, **caractérisée en ce que**, autour du tube de guidage (1), est enroulée une pluralité de tubes de refroidissement (4) disposés de préférence côte à côte.

4. Canalisation selon la revendication 1, **caractérisée en ce que** le film réfléchissant est une bande de matière plastique revêtue d'un métal au moins d'un côté.
